# EUROPÄISCHE PATENTSCHRIFT

(11) **EP 3 164 005 B1**
(45) Veröffentlichungstag und Bekanntmachung des Hinweises auf die Patenterteilung: **30.07.2025**
(21) Anmeldenummer: 15744869.7
(22) Anmeldetag: 16.06.2015
(51) Int. Cl.: A01P 1/00, A01P 3/00, A01N 37/46, A01N 63/00

(54) **VERFAHREN ZUR PROPHYLAXE VON INFEKTIONEN BEI NUTZ- UND ZIERPFLANZEN, BEVORZUGT BEIM WEINBAU, SOWIE BEI GEHÖLZEN**
METHOD FOR PROPHYLAXIS OF INFECTIONS IN CROPS AND ORNAMENTALS, PREFERABLY IN VITICULTURE, AND IN WOODY PLANTS
PROCÉDÉ DE PROPHYLAXIE DES INFECTIONS DES PLANTES CULTIVÉES ET ORNEMENTALES, DE PRÉFÉRENCE LES VIGNES ET LES ARBRES

(30) Priorität: 03.07.2014 DE 102014009813
(43) Veröffentlichungstag der Anmeldung: 10.05.2017
(73) Patentinhaber: Biopract GmbH, 12489 Berlin (DE)
(72) Erfinder: GERHARDT, Matthias, 10779 Berlin (DE); PHEIFFER, Joachim, 57234 Wilnsdorf (DE); KASSEMEYER, Hanns-Heinz, 79292 Pfaffenweiler (DE); FUCHS, Rene, 79249 Herzhausen (DE); JACOBS, Sophie, 35394 Giessen (DE)
(74) Vertreter: Schulz Junghans Patentanwälte PartGmbB
(86) Internationale Anmeldenummer: PCT/DE2015/000289
(87) Internationale Veröffentlichungsnummer: WO 2016/000671

(56) Entgegenhaltungen:
- WO-A1-01/30161
- WO-A1-91/02459
- CN-A- 101 514 331
- CN-A- 103 461 383
- DE-A1- 102005 048 520
- JP-A- 2011 177 105
- JP-A- S5 473 182
- JP-A- S5 785 307
- COLUM DUNNE ET AL: "Overproduction of an inducible extracellular serine protease improves biological control of Pythium ultimum by Stenotrophomonas maltophilia strain W81", JOURNAL OF GENERAL MICROBIOLOGY, vol. 146, no. 8, 1 August 2000 (2000-08-01), pages 2069 - 2078, XP055576706, ISSN: 1350-0872, DOI: 10.1099/00221287-146-8-2069
- COLUM DUNNE ET AL: "Overproduction of an inducible extracellular serine protease improves biological control of Pythium ultimum by Stenotrophomonas maltophilia strain W81", MICROBIOLOGY, vol. 146, no. 8, 1 August 2000 (2000-08-01), pages 2069 - 2078, XP055576706, ISSN: 1350-0872, DOI: 10.1099/00221287-146-8-2069

## Beschreibung

Die Erfindung betrifft ein Verfahren zur Prophylaxe von Infektionen durch Pilze, insbesondere durch Oomyceten, sowie von bakteriellen Infektionen bei Nutz- und Zierpflanzen. Anwendungsgebiete sind der Gemüse-, Obst-, Wein-, und Zierpflanzenbau, bevorzugt der Weinbau und der Gemüseanbau.

### Bedeutung, Verlauf und Kontrolle von Infektionen durch Oomyceten

Pflanzenkrankheiten führen bei Nutz- und Zierpflanzen sowie bei Gehölzen jährlich zu hohen wirtschaftlichen Verlusten. Auch bei hydroponischem Anbau von Gemüse und Zierpflanzen in Unterglaskulturen spielen Pilze und Oomyceten, wie Phytophthora, Pythium und Peronospora, als Ursache für Pflanzenkrankheiten eine besondere Rolle (Malathrakis & Goumas, 1999; Paulitz & Berlanger, 2001). Im Gemüse (insbesondere Kartoffel und Tomate), Obst-, Zierpflanzen- und Weinbau sowie in der Forstwirtschaft sind sie von besonderer wirtschaftlicher Bedeutung. Die Kartoffel wurde 2013 weltweit auf einer landwirtschaftlich genutzten Fläche von 19,3 Mio. Hektar angebaut (Food and Agriculture Organization of the United Nations, Statistics Division). Das wichtigste Pathogen im Kartoffelanbau, dessen Bedeutung durch die Ausweitung des Anbaus in wärmere Klimate noch zugenommen hat, ist der Oomycet Phytophthora infestans, der Erreger der Kraut- und Knollenfäule (Oerke und Steiner, 1996). Seine Ausbreitung kann nur durch ständigen Fungizideinsatz kontrolliert werden (mehr als 235 Mio. US$ jährlich allein für den Kartoffelanbau). Der gesamte Markt allein für Fungizide umfasst 5,5 Mrd. US$ pro Jahr (Powell & Jutsum, 1993).

Allein für den Pflanzenschutz im Weinbau werden in Deutschland jährlich ca. 100 Mio. Euro ausgegeben (Ochßner, 2009). Im ökologischen Weinbau werden ausschließlich kupferhaltige Pflanzenschutzmittel eingesetzt, die allerdings umweltgefährlich und unter Umständen giftig sind. Aus diesem Grund ist es von großem Interesse, alternative, verbesserte Schutzmittel zu etablieren, die wirksam gegen Krankheitserreger und gleichzeitig umweltverträglich sind.

Der Kreislauf der Oomyceten wird hier am Beispiel von Plasmopara viticola, dem falschen Mehltau der Weinrebe, dargestellt. Er gliedert sich in zwei Abschnitte von unterschiedlicher epidemiologischer Bedeutung. Im sexuellen Abschnitt wird die Oospore gebildet, die der Überwinterung des Erregers dient. Im asexuellen Sommerkreislauf werden in großer Menge Sporangien freigesetzt. Plasmopara viticola überdauert den Winter als Oosporen am Boden in Resten stark befallener Blätter. Die Oosporen werden im Lauf des Spätwinters keimbereit und erhalten ihre Keimfähigkeit bis in den Frühsommer hinein. Sobald sich der Boden erwärmt und ausreichend Niederschläge gefallen sind, keimen sie und bilden Primärsporangien. Bis Mitte Juni können bei starkem Regen immer wieder Oosporen keimen. Ein Teil der Oosporen kann auch über ein Jahr ruhen und erst im darauffolgenden Jahr zur Keimung kommen. In der Regel findet die Keimung und die Freisetzung der Zoosporen aus dem Primärsporangium statt, wenn die Temperaturen über 10 °C ansteigen und mehr als 8 mm Niederschlag gefallen sind. Unter diesen Voraussetzungen sind meist die ersten Blättchen der Weinrebe entfaltet, so dass die Primärinfektion stattfinden kann. Für die Primärinfektion durch die gekeimten Zoosporen müssen die Blätter ausreichend mit Wasser benetzt sein. Ausschließlich in dieser Phase kann, wenn es gelingt die Zoosporen zu schädigen oder zu hemmen, die Infektion verhindert oder reduziert werden.

Die Primärinfektion ist der Startpunkt des Sommerkreislaufs von Plasmopara viticola, bei dem sich der Erreger mit Sporangien asexuell vermehrt und unter günstigen Vermehrungsbedingungen Epidemien verursachen kann. An die Primärinfektion schließt sich die Inkubationszeit an, während der sich der Erreger im Blattinneren entwickelt, ohne dass sichtbare Symptome zu erkennen sind. Eine Behandlung der Infektion ist zu diesem Zeitpunkt nicht mehr möglich. Wachstum und Entwicklung des Erregers sind sehr stark von der Temperatur abhängig, so dass bei höheren Temperaturen das Gewebe schneller vom Mycel durchdrungen wird und die Ölflecke eher erscheinen als bei tieferen Temperaturen. Am Ende der Inkubationszeit erscheinen sogenannte Ölflecke als sichtbares Zeichen der Pilzinfektion. Sobald nachts die relative Luftfeuchtigkeit über 95 % ansteigt und Temperaturen über 12 °C herrschen, treten die Sporangienträger aus den Spaltöffnungen der infizierten Blattfläche hervor. Die Verbreitung der Sporangien erfolgt durch Luftbewegung oder Wassertropfen. Gelangen diese in einen Wassertropfen auf einem grünen Organ ihrer Wirtspflanze, so schlüpfen die Zoosporen. Der Schlupf der Zoosporen und die darauffolgende Infektion geschieht unter optimalen Bedingungen bei 24 °C innerhalb von vier Stunden. Herrschen tiefere oder höhere Temperaturen, schlüpfen die Zoosporen verzögert und der Infektionsprozess ist verlängert. Plasmopara viticola kann Blätter, Gescheine samt Stielgerüst, Beeren und Triebspitzen infizieren, wenn diese Spaltöffnungen aufweisen und benetzt sind. Bereits kleine Wassertropfen reichen für die Infektion aus, aber die Infektionsbedingungen sind günstiger, wenn die Benetzung mit Wasser großflächig ist und lange andauert. Nach jeder Infektion folgt wiederum eine Inkubationszeit und im Anschluss daran der Ausbruch der Sporangien, sobald nachts ausreichend Feuchtigkeit herrscht. Plasmopara viticola zählt zu den polyzyklischen Erregern und kann während einer Vegetationsperiode eine Reihe von Entwicklungszyklen durchlaufen. Wenn über längere Zeit optimale Bedingungen für den Ausbruch der Sporangien und für Infektionen herrschen und die Inkubationszeiten aufgrund der Temperaturverhältnisse kurz sind, kann sich sehr rasch eine Epidemie entwickeln. Trockenheit verzögert die Ausbreitung von Plasmopara viticola und hemmt den Verlauf von Epidemien. Es ist möglich, Phasen hoher Infektionsgefahr lokal vorherzusagen und damit gezielte prophylaktische Schutzmaßnahmen zu ergreifen. Unter den in Mitteleuropa vorherrschenden klimatischen Verhältnissen ist in jedem Jahr mit Infektionen durch derartige Erreger zu rechnen. In welchem Umfang diese Infektionen zu Epidemien führen, hängt stark vom Verlauf der Jahreswitterung ab und ist zu Beginn der Vegetationsperiode noch nicht absehbar. Epidemien der z.B. Rebenperonospora (Plasmopara viticola) können bei den hochanfälligen klassischen Traubensorten innerhalb weniger Regentage sehr heftig verlaufen. Daher muss diese Infektion in einem frühen Stadium erfasst und kontrolliert werden. Ein nachträgliches Regulieren ist nicht mehr möglich, wenn der Befall bereits fortgeschritten ist. Aus diesem Grund ist wirtschaftlicher Pflanzenanbau nur mit vorbeugenden Maßnahmen gegen derartige Infektionen möglich. Ein Prognoseverfahren, mit dem diese vorbeugende Kontrolle gezielt durchgeführt werden kann, wurde für Plasmopara viticola bereits am Staatlichen Weinbauinstitut entwickelt und in die Praxis eingeführt. Für den konventionellen Pflanzenbau werden gegenwärtig zahlreiche Fungizide angeboten. Allein im Weinbau sind derzeit 29 Fungizide für das Anwendungsgebiet Rebenperonospora zugelassen.

Für den ökologischen Weinbau bedeutet die Rebenperonospora eine Herausforderung, da sie hier unbedingt vorbeugend behandelt werden muss und derzeit nur kupferhaltige Präparate (z.B. Cuprozin) eine Zulassung besitzen. Wegen der bekannten ökotoxikologischen Bedenken gegenüber Kupfer ist es dringend erforderlich, dass Alternativen zu diesem Wirkstoff gefunden werden. Allerdings müssen diese Alternativen hinreichende Wirksamkeit auch unter hohem Befallsdruck aufweisen. Seit Jahren haben Versuche gezeigt, dass die überwiegende Mehrheit der als Pflanzenstärkungsmittel aufgeführten Präparate keine befriedigende Wirkung gegen Rebenperonospora besitzt. Einige Pflanzenstärkungsmittel zeigen bei einem niedrigen Befallsdruck eine Wirkung gegen die Rebenperonospora, hier wäre aber eine Bekämpfungsmaßnahme nicht nötig gewesen. Bei einem höheren Befallsdruck, der eine Bekämpfung auch aus ökonomischen Überlegungen rechtfertigt, war die Wirkung der geprüften Präparate unzureichend. An diesen Versuchen ist zu erkennen, dass im ökologischen Pflanzenbau derzeit keine biologische Bekämpfung der Rebenperonospora praktikabel ist. Gerade im ökologischen Weinbau mit der beschränkten Möglichkeit, eine Epidemie zu stoppen, sind wirksame und praxistaugliche Konzepte zur biologischen Kontrolle von Epidemien dringend erforderlich.

### Bedeutung, Verlauf und Kontrolle von bakteriellen Infektionen

Obwohl die Anzahl an pflanzenpathogenen Bakterien geringer ist als die Anzahl pilzähnlicher Erreger, sind die durch bakterielle Erkrankungen ausgelösten Schäden an Nutzpflanzen sehr hoch. Bakterien der Gattung Xanthomonas verursachen weltweit Krankheiten an allen Hauptgruppen höherer Pflanzen, die mit chlorotischen und nekrotischen Läsionen, Welke und Fäulen einhergehen. Ein Beispiel mit hoher wirtschaftlicher Bedeutung ist die Schwarzfäule an Kohlarten, die durch Xanthomonas campestris pv. campestris ausgelöst wird. Xanthomonas oryzae pv. oryzae führt bei Befall von Reispflanzen zur Weißblättrigkeit, welche eine der schwersten Reiskrankheiten darstellt, und in weiterer Folge zu großen ökonomischen und sozialen Problemen führt. Ebenfalls zu nennen sind hier das Pathovar X. axonopodis pv. citri, der Erreger des Citruskrebs, und X. campestris pv. Vesicatoria, der Erreger der bakteriellen Fleckenkrankheit bei Paprika und Tomate, die vor allem in Regionen mit feucht-warmem Klima von ökonomischer Bedeutung ist.

Des Weiteren ist hier der Feuerbrand, ausgelöst durch den meldepflichtigen Erreger Erwinia amylovora zu benennen, dessen Wirtspflanzen Rosengewächse, wie Äpfel, Birne und Quitte sind. E .amylovora führt zum Welken von Blättern und Blüten befallener Pflanzen, die sich dann braun oder schwarz verfärben. Des Weiteren ist die Bakterienart Pseudomonas syringae, der Auslöser verschiedener Pflanzenkrankheiten wie Krebs, Welke und Flecken an wichtigen Kulturpflanzen wie Tomate, Paprika, Soja aufzuführen. Diese weitverbreitete Art ist in vielen unter Glaskulturen wie Tomaten, Gurke und Zucchini von großer Bedeutung.

Die meisten der beschriebenen bakteriellen Pflanzenpathogene gehören zu der Gruppe der Proteobacteria und sind gram-negative Organismen (z.B. Pseudomonas, Xanthomonas). Es gibt allerdings auch wirtschaftlich relevante gram-positive Erreger, wie z.B. Clavibacter michiganensis ssp. michiganensis, welcher der Erreger der bakteriellen Tomatenwelke ist. Dieser Quarantäneschädling hat in wärmeren und trockeneren Tomatenanbaugebieten sowie in Gewächshäusern große Bedeutung.

Pflanzenpathogene Bakterien haben verschiedene Strategien, um in der Umwelt zu überdauern, zum Beispiel im Boden, in Pflanzenmaterial wie Samen oder in Insekten. Für ihre Verbreitung spielen Insekten, andere Tiere und der Mensch eine wichtige Rolle. Wasser, z.B. in Form von Regentropfen, stellt bezüglich der Verteilung auf einer Pflanze einen wichtigen Transportvektor dar. Werden Bakterien auf eine Wirtspflanze übertragen, können sie durch natürliche Öffnungen, wie Stomata oder Hydathoden, durch Verletzungen auf der Pflanze in diese eindringen. Eine hohe Bakteriendichte, sowie äußere Bedingungen wie Regen, hohe Luftfeuchte oder beschädigte Stellen an Pflanzenoberflächen erleichtern die Infektion einer Pflanze. Im Inneren der Pflanze können sich Bakterien gut vermehren, sie kolonisieren den Apoplast und beschädigen von dort aus die gesamte Pflanze. Sie stören die Physiologie und Morphologie der Pflanzen und sind dadurch der Auslöser von Krankheitssymptomen wie nekrotischen Stellen, Entlaubung, Schorfbildung, Welke oder Fäulnis (De la Fuente und Burdman, 2011 ).

Es ist daher unbedingt notwendig, Nutzpflanzen vor solchen bakteriellen Infektionen zu schützen und dadurch deren Ernte zu sichern. In der aktuellen Liste der in Deutschland zugelassenen Pflanzenschutzmittel mit antibakterieller Wirkung sind verschiedene chemische Verbindungen und Kupferverbindungen aufgeführt. Kupferhaltige Präparate sind die einzigen Mittel, die wiederum im ökologischen Landbau eingesetzt werden dürfen. Behandlungen mit kupferhaltigen Präparaten zur Kontrolle von Bakteriosen haben nur eine Teilwirkung und stoßen an ihre Grenzen, sobald die Dichte des Bakterien-Inokulums eine gewisse Schwelle überschritten hat. Wegen der bekannten ökotoxikologischen Effekte von Kupferverbindungen und anderen Agrochemikalien bestehen berechtigte Bedenken gegenüber dem Einsatz solcher Pflanzenschutzmittel. Des Weiteren ist es selbst in Deutschland in Ausnahmen erlaubt, zur Kontrolle des Feuerbrandes Pflanzenschutzmittel einzusetzen, welche Antibiotika wie Streptomycin enthalten. Streptomycin ist in anderen Ländern ein zulässiges Mittel gegen Bakteriosen, aber gleichzeitig ist der Antibiotikaeinsatz höchst bedenklich, da durch ungezielten Einsatz von Antibiotika unerwünschte Auswirkungen auf die Umwelt sowie Wirkungsverluste durch Resistenzbildung der Bakterien zu befürchten ist. Es ist daher dringend erforderlich, dass verbesserte, hoch wirksame und wirtschaftlich relevante Alternativen zu diesen Wirkstoffen entwickelt werden, die für den Naturhaushalt und die Verbraucher besser verträglich sind.

### Gegenwärtige Entwicklung der Strategien im Pflanzenschutz

1. An chemische Pflanzenschutzmittel werden im Hinblick auf Wirksamkeit, Selektivität, Spezifität, biologische Abbaubarkeit und Wirkung auf Nichtzielorganismen ständig höhere Anforderungen gestellt. Inzwischen liegt eine Reihe von neuartigen Pflanzenschutzmitteln vor, die diesen Anforderungen entsprechen. Die Anwendung zahlreicher älterer Verbindungen, wie chlorierte Kohlenwasserstoffe (Aldrin, DDT, DDD, Dieldrin, Kelthan) ist mittlerweile verboten. Zunehmend stehen aber auch gegenwärtig eingesetzte chemische Pflanzenschutzmittel (z.B. ortho-Phenylphenol E 231 oder Thiabendazol E 233) in der Kritik. Sie zeigen zahlreiche schädliche Nebenwirkungen, die ihren Einsatz problematisch machen. Dazu gehören neben der Schädigung der Kulturpflanze, Geschmacksveränderungen bei den Früchten, toxische Wirkungen auf zahlreiche Nützlinge, Entwicklung resistenter Schädlingspopulationen, unvollständiger Abbau durch Mikroorganismen und dadurch eine zu lange Persistenz und Anreicherung im Boden sowie schließlich die Auswaschung in das Grundwasser und die Anreicherung in der Nahrungskette von Mensch und Tier. (Quelle: Umweltlexikon - www.umweltlexikon-online.de).
2. Zunehmend etablierten sich Verfahren des biologischen und integrierten Pflanzenschutzes, wie der Einsatz von Nutzorganismen und Pheromonen gegen Insekten, der Einsatz bodenbürtiger bakterieller und pilzlicher Antagonisten sowie die Verwendung von Pflanzenextrakten. Zu den bedeutendsten antagonistisch wirksamen Organismengattungen gehören unter den Bakterien Bacillus, Pseudomonas und Streptomyces sowie unter den Pilzen Trichoderma, Coniothyrium und Verticillium. Besondere Bedeutung erlangten in diesem Zusammenhang das Bakterium Bacillus subtilis, das als"plant growth promoting rhizobacterium" (PGPR) phytosanitär wirksame Stoffwechselprodukte ausscheidet und die Pilz-Gattung Trichoderma, deren Stämme als "Biocontrol Agent" genutzt werden (Kücük, C. and M. Kivanc, 2002; DeMarco, J.L., et al., 2003). Während viele tierische Schaderreger durch diese biologischen Verfahren ausreichend kontrolliert werden können, sind Infektionen durch Oomyceten durch diese Maßnahmen nur schwer zu bekämpfen. Im Agrarbereich sind folgende Pflanzenkrankheiten aufgrund ihrer Infektionsgefahr und der daraus resultierenden Verluste von herausragender Bedeutung (Tabelle 1):

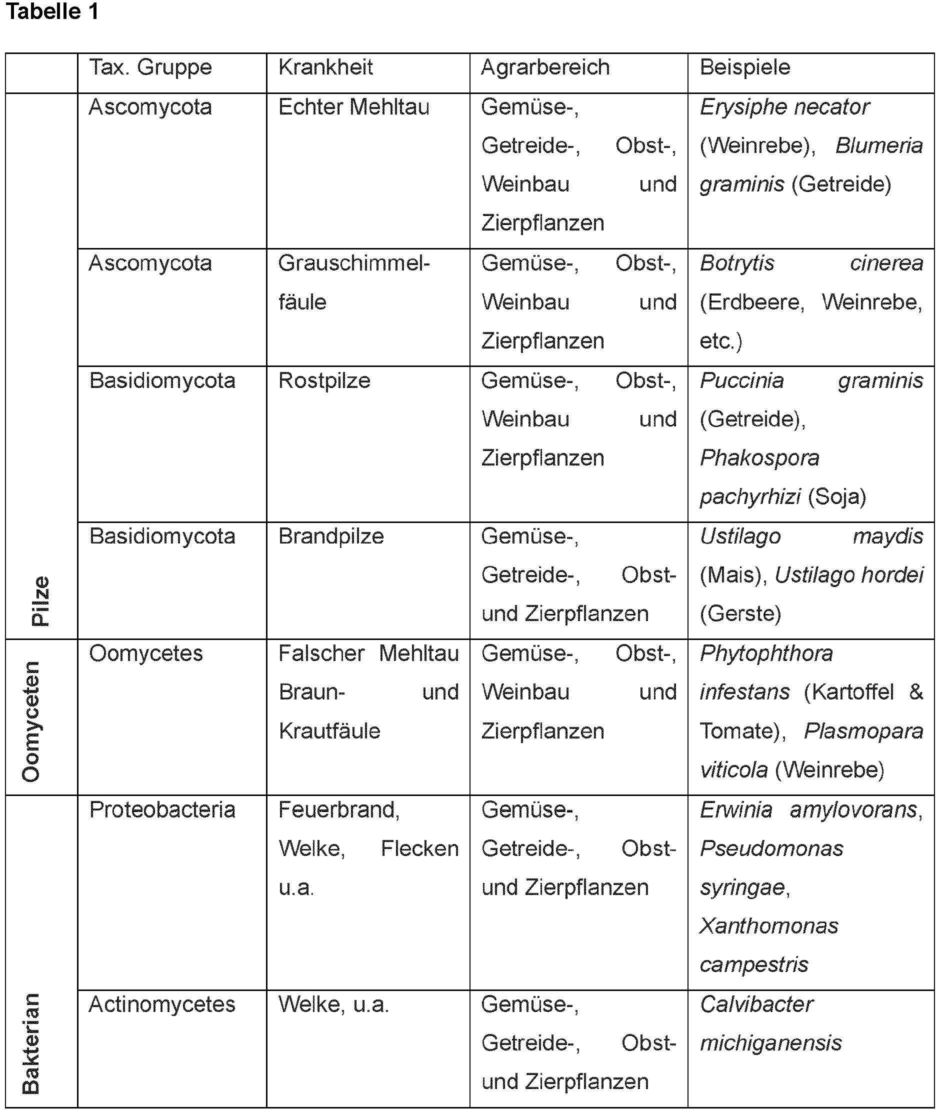

### Stand der Technik

Bekannt ist, dass Glycosid-spaltende Enzympräparate vom Typ der Nicht-Stärke Polysaccharid-Hydrolasen in der Prophylaxe und Therapie pflanzenpathogener Pilze Wirkungen zeigen. Hierbei ist von einem direkten Angriff des Enzyms auf Zellwandstrukturen der Pilze, insbesondere der Oomyceten auszugehen (DE 10 2205 048 520, Biopract GmbH). Diese Hydrolasen können aber auch die Pflanzenzellwand beschädigen und eignen sich daher nur bedingt für den Pflanzenschutz. Dunne et al. (Microbiology (2000), 146, 2069-2078) zeigt, dass der Bakterienstamm *Stenotrophomonas maltophilia* W81 eine Serinprotease herstellt, die in vitro fungizide Wirkung hat.

Der Einsatz von Enzymen vom Typ der Nicht-Stärke-Polysaccharid - Hydrolasen zur Prophylaxe und Therapie pilzlicher Phytopathogene wird durch eine Reihe von Befunden auch in anderen Gebieten gestützt. Zum Beispiel liegen Erfahrungen in der Bekämpfung Oomyceten - basierter Fischmykosen mit komplexen Enzympräparaten aus *Trichoderma spp.* vor (WO 2004/002574 A1 Biopract GmbH).

Das United States Patent 6663860 (Tvedten, December 16, 2003) beschreibt Proteasen als Pestizid gegen u.a. Insekten, Bakterien und Pilze. Allerdings wird ein Einsatz zur Prophylaxe von Pilzbefall im Weinbau nicht vorgesehen.

Des Weiteren wird in verschiedenen Patentschriften die Kombination aus einem Pestizid und einem Enzym bzw. einer Protease beschrieben, wobei die beschriebene Wirkung hier eher von dem Pestizid und nicht von dem zugesetzten Enzym allein ausgeht (WO 2013/096383 A2, CN 103461383 A, WO 1997/047202 A1, WO 1990/003732 A1). Andere Patentschriften beschreiben die Kombination von Detergentien und Enzymen (US 7393528 B2), von Pflanzenextrakten und Proteinen (WO 2001/030161 A1) sowie von einer oberflächenaktiven Substanz und einem Enzym (EP 184288 A1). Auch aus diesen Veröffentlichungen geht nicht hervor, dass das Enzym selbst für die Pestizide Wirkung verantwortlich ist.

Schließlich wurden in der Vergangenheit Enzyme oder Enzymkombinationen beschrieben, die unter anderem antifungizide oder antibakterielle Wirkungen zeigten, wie z. B. eine Protease aus Pflanzen (WO 1991/002459 A1), eine Protease eines Erdwurms (JP 2011177105A) oder der Kulturüberstand einer Bacillus Fermentation (JP 54073182 A).

Keine der oben genannten Erfindungen beschreibt eine vergleichbar effiziente Lösung des nach wie vor bestehenden Problems des Befalls von Kulturpflanzen durch Oomyceten und Bakterien. Die hier beschriebenen Proteasen stellen damit erstmals eine hochwirksame und gleichzeitig ökologisch vertretbare Alternative zu gängigen Pflanzenschutzmitteln dar.

### Ziel der Erfindung

Die Erfindung hat das Ziel, ein hochwirksames und für die Pflanze selbst sowie für das Ökosystem unbedenkliches Mittel zur Kontrolle von Infektionen durch Pilze, insbesondere Oomyceten, und bakteriellen Infektionen bei Nutz- und Zierpflanzen zu entwickeln. Ihr liegt die Aufgabe zugrunde, ein Verfahren zur Prophylaxe von Infektionen von Nutzpflanzen in der Landwirtschaft durch phytopathogene Erreger zu entwickeln. Insbesondere soll die Aufgabe gelöst werden, Epidemien wie die Rebenperonospora bei Weinsorten frühzeitig zu erfassen und zu verhindern. Die Bereitstellung geeigneter Mittel wird ebenfalls von der Aufgabe der Erfindung umfasst.

Diese Aufgabe wird durch die in den Ansprüchen beschriebenen Maßnahmen gelöst. Das erfindungsgemäße Verfahren ist dadurch gekennzeichnet, dass ein Konzentrat bzw. eine einsatzbereite Verdünnung hergestellt wird, welche eine Protease enthält. Kern der Erfindung ist die überraschende Möglichkeit, mit Proteasen allein ein effektives Mittel zur Kontrolle von Infektionen bei Nutz- und Zierpflanzen zur Verfügung stellen zu können. Des Weiteren kann das Schutzmittel Stabilisatoren, Haftvermittler und Spreizmittel enthalten, die die Applikationseigenschaften verbessern. Auch gängige Regen- und UV-Stabilisatoren können in diesen Mischungen enthalten sein. Diese Mischung wird mit üblichen Verteilungssystemen zu festgelegten Zeitpunkten, welche auf Grund der Witterung bestimmt werden, so auf die Anbaufläche appliziert, dass die gesamten Pflanzen benetzt werden. Die Applikation kann bei Temperaturen zwischen 4 und 34°C und somit während der gesamten Wachstumsperiode erfolgen. Im Pflanzenanbau unter Glas ist die Applikation von der Witterung weitestgehend unabhängig und die Temperaturen liegen im Bereich zwischen 15°C und 25°C. Durch diese Art der Applikation wird sichergestellt, dass die Enzympräparate aktiv sind und eine Infektion der Pflanze durch z.B. die Zoosporen der phytopathogenen Oomyceten oder durch die bakteriellen Erreger, wie *Pseudomonas syringae,* verhindert wird. Die Einsatzmenge pro Fläche muss abhängig von der Kulturpflanze festgelegt werden. Gegenwärtig werden zum Beispiel im Weinbau für eine Fläche von einem Hektar etwa 400 - 800 Liter Spritzbrühe eingesetzt. Die beschriebenen Enzympräparate werden so abgemischt, dass die konventionelle Spritztechnik weiter eingesetzt werden kann.

Ein erster Aspekt der Erfindung bezieht sich auf ein Verfahren zur Prophylaxe von Infektionen bei Nutz- und Zierpflanzen, dadurch gekennzeichnet, dass die oberirdischen Pflanzenteile mit einer wässrigen Lösung einer bakteriellen Serinprotease besprüht werden, und dadurch gekennzeichnet, dass die bakterielle Serinprotease aus *Bacillus sp.* oder *Nocardiopsis sp.* stammt.

In bestimmten Ausführungsformen ist das Verfahren dadurch gekennzeichnet, dass die bakterielle Serinprotease aus *Nocardiopsis sp.* stammt.

In bestimmten Ausführungsformen ist das Verfahren dadurch gekennzeichnet, dass die wässrige Lösung allein die bakterielle Serinprotease enthält.

In bestimmten Ausführungsformen ist das Verfahren dadurch gekennzeichnet, dass die wässrige Lösung allein eine Kombination bakterieller Serinproteasen enthält.

In bestimmten Ausführungsformen ist das Verfahren dadurch gekennzeichnet, dass die Infektionen durch Oomyceten hervorgerufen werden.

In bestimmten Ausführungsformen ist das Verfahren dadurch gekennzeichnet, dass es sich bei den Oomyceten um *Plasmopara viticola, Phytophthora infestans* oder *Pseudoperonospora cubensis* handelt.

In bestimmten Ausführungsformen ist das Verfahren dadurch gekennzeichnet, dass die Infektionen durch Bakterien hervorgerufen werden.

In bestimmten Ausführungsformen ist das Verfahren dadurch gekennzeichnet, dass es sich bei den Bakterien um *Pseudomonas syringae* oder *Clavibacter michiganensis* handelt.

In bestimmten Ausführungsformen ist das Verfahrens dadurch gekennzeichnet, dass die wässrige Lösung einer bakteriellen Serinprotease bei der Bekämpfung pathogener Erreger in einer Dosis von 0,001 % - 1% appliziert wird.

In bestimmten Ausführungsformen ist das Verfahren dadurch gekennzeichnet, dass eine zeitliche Intervallbehandlung der Pflanzen durchgeführt wird.

In bestimmten Ausführungsformen ist das Verfahren dadurch gekennzeichnet, dass die wässrige Lösung einer bakteriellen Serinprotease bei pH-Werten von 4,0 - 8,0 eingesetzt wird.

In bestimmten Ausführungsformen ist das Verfahren dadurch gekennzeichnet, dass die wässrige Lösung einer bakteriellen Serinprotease bei Temperaturen von 4 bis 34 °C eingesetzt wird.

In bestimmten Ausführungsformen ist das Verfahren dadurch gekennzeichnet, dass die wässrige Lösung einer bakteriellen Serinprotease mit Haft- und Netzmitteln sowie mit Stabilisatoren formuliert ist.

Die beschriebene Erfindung stellt einen bedeutenden Fortschritt gegenüber momentan etablierten Mitteln und Verfahren dar.

Die Vorteile gegenüber dem Stand der Technik sollen hier dargestellt werden:
- Im Gegensatz zu Kupferpräparaten oder anderen chemischen Pflanzenschutzmitteln ist der Einsatz von Enzympräparaten für das Ökosystem ungefährlich, da es im Boden zu einem vollständigen Abbau des Wirkstoffes kommt, nicht zu dessen Akkumulation. Beträchtliche Umweltbelastungen werden dadurch verhindert.
- Es treten keine phytotoxischen Reaktionen auf, da die erfindungsgemäß eingesetzten Proteasen die Pflanzenoberflächen nicht angreifen.
- Proteasen und andere Enzyme bleiben während des Pflanzenwachstums wirksam. Sie haften nicht an einer Stelle auf der Blattstruktur, sondern verteilen sich in einem Flüssigkeitsfilm auf der Oberfläche.
- Die Wirksamkeit der Enzyme bleibt über einen relevanten Zeitraum von mehreren Tagen trotz Regen und UV-Strahlung erhalten. Diese Stabilität kann gegebenenfalls durch geeignete Formulierungen verbessert werden.

Proteasen, auch Peptidasen genannt, spalten Peptidbindungen in Proteinen und fördern so deren Abbau zu Peptiden oder Aminosäuren. Proteasen werden auf Basis ihrer Wirkungsart in folgende Gruppen eingeteilt: Serin-Proteasen, EC 3.4.21.-, (S), Cystein-Proteasen (C), Asparginsäure-Proteasen (A), Metalloproteasen (M), und unbekannte oder bisher unklassifizierte Proteasen (Handbook of Proteolyse Enzymes, A. J. Barrett, N. D. Rawlings, J. F. Woessner (eds), Academic Press (1998)).

Proteasen, die in dem Sinne der beschriebenen Erfindung eingesetzt werden, sind Serinproteasen. Der katalytische Mechanismus dieser Enzymklasse beruht auf der nucleophilen Hydroxylgruppe der Aminosäure Serin, die Peptidbindungen spalten kann. Entsprechende Enzyme werden aus Kulturüberständen aus Mikroorganismen der Gattungen *Nocardiopsis* oder *Bacillus* gewonnen. Die entsprechenden Enzyme können auch rekombinant hergestellt werden. Des Weiteren kann es sich bei den wirksamen Proteasen auch um Mutationen, Varianten oder Fragmente der beschriebenen Enzyme handeln, die analog wirken.

Die Proteaseaktivität kann mit jedem Nachweisverfahren bestimmt werden, bei dem ein Substrat eingesetzt wird, das die entsprechenden Peptidbindungen enthält (z.B. Casein).

Überraschend wurde gefunden, dass Proteasepräparate, die beispielsweise in der Tierernährung eingesetzt werden, die Infektion von Pflanzen durch phytopathogene Oomyceten und Bakterien verhindern. Insbesondere die im Kreislauf der Oomyceten auftretenden Zoosporen, die für die eigentliche Infektion des Blattgewebes verantwortlich sind, werden durch die Wirkung dieser Enzyme irreversibel geschädigt, die Infektion der so geschützten Pflanze bleibt aus. Der Wirkmechanismus gegen bakteriellen Befall ist bislang nicht aufgeklärt. Die deutliche Wirkung dieser Enzyme war in diesem Ausmaß nicht zu erwarten, da die Wirkmechanismen und Angriffspunkte dieser Enzyme nicht mit dem beschriebenen Wirkmechanismus von β-Glucanasen oder Chitinasen übereinstimmen.

Kommerziell erhältliche Präparate, in denen die beschriebenen Proteasen enthalten sind, sind beispielsweise Ronozyme^{®}ProAct^{®} (DSM Nutritional Products AG, Anwendungsbeispiele 1-9: Prot III), in welchem eine Serinprotease von *Nocardiopsis sp.* enthalten ist, oder Alcalase^{®} (Novozymes AG), das vor allem eine Serinprotease, Subtilisin A, von Bacillus licheniformis enthält. Des Weiteren zeigten ausgewählte Proteasepräparate der Firma Lumis Enzymes (PAP 2XS), welches soweit bekannt Papain aus der Papaya enthält, der Firma Dyadic (Protease Plus, Protease AP Conc) und der Firma AB Enzymes (BlOTOUCH ROC 250LC), welches soweit bekannt eine Protease aus Trichoderma beinhaltet, protektive Wirkung.

Der Charakteristik der spezifischen Erkrankung folgend erfolgt die Enzymapplikation gegen Blattpathogene (z.B. Falscher Mehltau oder *Pseudomonas syringae)* durch Behandlung der oberirdischen Pflanzenteile (z.B. durch Sprühbehandlung) mit Konzentrationen eines Enzympräparates von 0,001% - 1 %.

Die erfindungsgemäße Wirkung der Enzympräparate, die sich in der Verhinderung des Infektionsgeschehens manifestiert, wird dadurch erreicht, dass die Proteasen einzeln oder als Gemische eingesetzt werden.

Die Enzyme werden aus Kulturüberständen von Mikroorganismen gewonnen. Die Komponenten werden vorzugsweise in wässrigem Milieu im Bereich von pH 4,5 bis 8,5, vorzugsweise bei pH 6,0-7,5, zur Inaktivierung der Erreger eingesetzt. Sie werden bei einer Wassertemperatur von 4°C bis 34°C, vorzugsweise bei 10°C bis 25° C, eingesetzt.

Die Erfindung soll nachfolgend durch Beispiele näher erläutert werden. Die Beispiele 1-7 behandeln den Einsatz von Proteasen als Schutz vor Oomyceten, während die Beispiele 8 und 9 die protektive Wirkung gegenüber bakteriellen Infektionen beschreiben. Als Protease III wurde Ronozyme^{®}ProAct^{®} (DSM Nutritionai Products AG) eingesetzt.

### Beispiele

### Schutz vor Infektion von Kulturpflanzen durch Oomyceten

### Beispiel 1

### Infektionsunterdrückende Wirkung punktueller Blattapplikation mit proteinspaltenden Enzympräparaten gegen Plasmopara viticola an Blattscheiben

Blattscheiben der Weinrebe *Vitis vinifera* cv. Müller-Thurgau wurden über Sprühapplikation mit unterschiedlichen proteinspaltenden Enzympräparaten (Protease I, II und III) einmalig behandelt, so dass die Blattunterseite der verwendeten Blattscheiben gleichmäßig benetzt wurde. Die Präparate enthielten jeweils eine Serinprotease, die entweder von einer Art der Gattung *Nocardiopsis* oder *Bacillus* gewonnen wurde. Die zur Behandlung eingesetzten Enzympräparate wurden in einem Konzentrationsbereich von 0,01% bis 1% (v/v) getestet. Der pH- Wert der in Wasser verdünnten Präparate lag zwischen 6 und 7,5. Zur Kontrolle wurden die Blattscheiben entweder mit einem kupferhaltigen Pflanzenschutzmittel bzw. mit Wasser besprüht. 24 Stunden nach der Behandlung erfolgte die künstliche Infektion der Blattscheiben mit Plasmopara viticola (ca. 40000 Sporen pro ml Wasser), dem Erreger des Falschen Mehltaus an der Weinrebe. Anschließend wurden die Blattscheiben auf Wasseragarplatten bei 22 °C für sechs Tage in einer Pflanzenkammer mit Tag-Nacht-Rhythmus inkubiert.

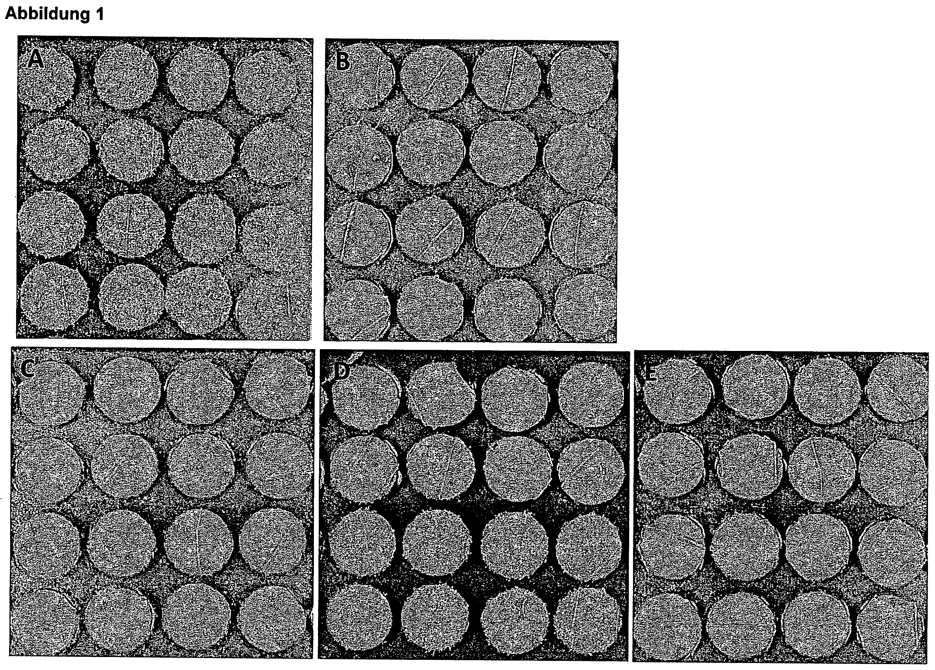

Die Befallstärke berechnet sich aus dem Verhältnis zwischen Gesamtfläche des Blattes und infizierter Blattfläche. Für die Auswertung wurde eine Bildauswertungs Software eingesetzt werden, die zwischen der Gesamtfläche (Anzahl der grünen Bildpunkte der Blattscheiben zu Versuchsbeginn) und infizierter Fläche (Anzahl der weißen Bildpunkte am Versuchsende) unterscheidet. Zwei der getesteten Proteasepräparate (I, III) sowie das kupferhaltigem Pflanzenschutzmittel (Cuprozin) verhinderten den Befall und die Entwicklung von *Plasmopara viticola* wirkungsvoll (Befallstärke 0%), das dritte Präparat, die Protease II verhinderte den Befall nur teilweise (Befallstärke 38%). Mit Wasser besprühte Blattscheiben zeigten hingegen einen deutlichen Befall (siehe Tabelle 2 und Abbildung 1).

**Tabelle 2:**

| Befallstärke (%) berechnet aus dem Verhältnis der Gesamtfläche der Blattscheibe zu der infizierten Fläche pro Blattscheibe nach Behandlung von Blattscheiben mit drei verschiedenen Protease-Präparaten (n=36) | | |
|---|---|---|
| | Befallstärke (MW) | Standardabweichung |
| H₂O | 87% | 6% |
| Cuprozin | 0% | 1% |
| Protease I | 0% | 1% |
| Protease II | 38% | 28% |
| Protease III | 0% | 0% |

### Beispiel 2

### Infektionsunterdrückende Wirkung punktueller Blattapplikation mit Kombinationen aus Proteasen. Chitinasen und glykosidspaltenden Enzympräparaten gegen Plasmopara viticola an Blattscheiben

Blattscheiben der Weinrebe Vitis vinifera cv. Müller-Thurgau wurden über Sprühapplikation mit einer Enzymkombination aus Protease, Chitinase und β- Glucanase im Mischungsverhältnis 1 :1:1 einmalig behandelt, so dass die Blattunterseite der verwendeten Blattscheiben gleichmäßig benetzt wurde. Die Konzentration der eingesetzten Enzympräparate betrug jeweils 0,1 % (v/v). Der pH- Wert der in Wasser verdünnten Präparate lag zwischen 6 und 7,5. Zur Kontrolle wurden die Blattscheiben entweder mit einem kupferhaltigen Pflanzenschutzmittel oder mit Wasser besprüht. 24 Stunden nach der Behandlung erfolgte die künstliche Infektion der Blattscheiben mit *Plasmopara viticola* (ca. 40000 Sporen pro ml Wasser), dem Erreger des Falschen Mehltaus an der Weinrebe. Anschließend wurden die Blattscheiben auf Wasseragarplatten bei 22 °C für sechs Tage in einer Pflanzenkammer mit Tag-Nacht-Rhythmus inkubiert.

Die Befallstärke berechnet sich aus dem Verhältnis zwischen Gesamtfläche des Blattes und infizierter Blattfläche. Für die Auswertung wurde eine Bildauswertungs Software eingesetzt werden, die zwischen der Gesamtfläche (Anzahl der grünen Pixel der Blattscheiben zu Versuchsbeginn) und infizierter Fläche (Anzahl der weißen Bildpunkte) unterscheidet. Die Entwicklung von *Plasmopara viticola* an den mit Enzymen und kupferhaltigem Pflanzenschutzmittel behandelten Blattscheiben wurde wirkungsvoll verhindert.

### Beispiel 3

### Infektionsunterdrückende Wirkung punktueller Blattapplikation mit proteinspaltenden Enzympräparaten gegen Plasmopara viticola an Gewächshauspflanzen

Junge Weinreben der Sorte *Vitis vinifera* cv. Müller-Thurgau wurden mit Hilfe einer stationären Applikationseinheit vollständig mit einem proteinspaltenden Enzympräparat (Protease III) einmalig behandelt. Die Konzentrationen des eingesetzten Enzympräparats betrugen 0,1 , 0,2 und 0,5% (v/v). Die pH-Werte der Spritzbrühen wurden zwischen 6,5 und 7,5 eingestellt. Zur Kontrolle wurden weitere Topfreben entweder mit einem kupferhaltigen Pflanzenschutzmittel oder mit Wasser besprüht. 24 Stunden nach der Behandlung mit dem Proteasepräparat erfolgte die künstliche Infektion der Blätter mit *Plasmopara viticola,* dem Erreger des Falschen Mehltaus an der Weinrebe.

Anschließend wurden die Pflanzen für eine Woche im Gewächshaus bei 20°C inkubiert. Der Befall wurde durch visuelle Erfassung des Anteils (%) erkrankter bzw. nekrotischer Veränderungen an Blättern/Stängeln an der Gesamtmasse einer Pflanze pro Wiederholung (100%) angegeben und fotografisch dokumentiert. Eine Boniturskala mit den Abstufungen 1, 5, 10, 15, 20, 25, 30, 40, 50, 90, 100 % erkrankte Veränderungen wurde verwendet.

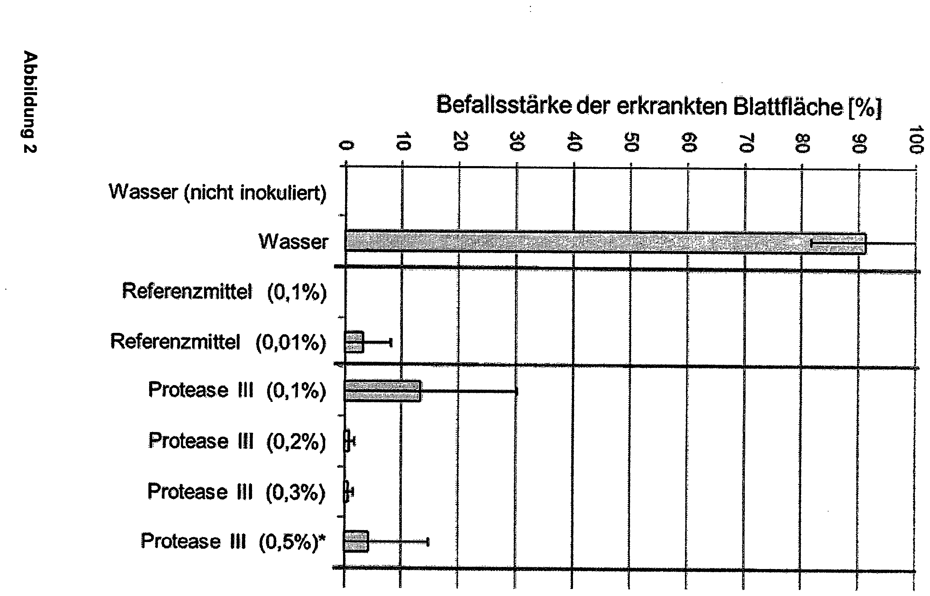

Die Entwicklung und Ausbreitung von *Plasmopara viticola* an den mit Protease III und kupferhaltigem Pflanzenschutzmittel behandelten Blättern wurde wirkungsvoll verhindert, während die mit Wasser besprühten Blätter einen hohen Befall zeigten (Abb. 2).

### Beispiel 4

### Infektionsunterdrückende Wirkung periodischer Applikation mit proteinspaltenden Enzympräparaten in Freilandversuchen gegen Plasmopara viticola

Ganze Weinreben der Sorte Vitis vinifera cv. Blauer Spätburgunder wurden mit Hilfe eines Tunnelspritzgeräts mit einem proteinspaltenden Enzympräparat (Prot III) über die Saison in Abständen von 8 bis 14 Tagen wiederholt behandelt, so dass die Oberfläche der Weinreben gleichmäßig benetzt wurde. Die Konzentration des eingesetzten Enzympräparats betrug 0,1% (v/v). Die pH-Werte der Spritzbrühen wurden zwischen 6,5 und 7,5 eingestellt. Zur besseren Blattbenetzung wurde der Sprühlösung noch ein Benetzungsmittel (TREND 90) zugefügt.

Zum Ende der Saison erfolgte die Bonitierung der Befallsstärke und Befallshäufigkeit des Falschen Mehltaus an Blättern und Trauben. Die Entwicklung von *Plasmopara viticola* an den Reben im Freiland wurde wirkungsvoll verhindert.

### Beispiel 5

### Protektive Wirkung proteinspaltender Enzympräparate gegen den Erreger der Kraut- und Braunfäule (Phvtophtora infestans) an Tomatenpflanzen

Tomaten der Sorte Red Robin wurden im 4-Blatt Stadium mit dem Proteasepräparat (Protease III, 0,1% (v/v) besprüht. Die pH-Werte der Spritzbrühen wurden zwischen 6,5 und 7,5 eingestellt. Als zusätzliche Varianten wurden der Proteaselösung gängige Benetzungsmittel (T/S forte, Biomaxima, Nufilm) mit einer Konzentration von 0,02% (v/v) zugesetzt. Als interne Kontrolle diente das kommerzielle Kupferpräparat Atempo und Wasser. Pro Variante wurden 5 Wiederholungen mit je einer Pflanze angesetzt.

24 Stunden nach der Enzymapplikation erfolgte die künstliche Inokulation mit dem Erreger *Phytophtora infestans* mit einer Sporangienkonzentration von 80 000 Sporen pro ml. Je Pflanze wurden je 6 ml Suspension eingesetzt. Die Pflanzen wurden bei ca. 16 °C und 100 % relativer Luftfeuchte ohne Beleuchtung in dem Inkubator aufgestellt. Nach 24 Stunden wurde ein Beleuchtungsrhythmus von 16:8 Stunden eingestellt und der Luftbefeuchter abgeschaltet. Die Bonitur fand 6 Tage nach der Infektion statt. Der Befall wurde durch visuelle Erfassung des Anteils (%) erkrankter oder nekrotischer Veränderungen an Blättern und Stängeln an der Gesamtmasse einer Pflanze angegeben und fotografisch dokumentiert (Tab.3).

**Tabelle 3:**

| Befall durch *Phytophtora infestans* und Wirkungsgrad des Proteasepräparates | | | |
|---|---|---|---|
| Nr. | Variante | Befall [%] Mittelwert (Standardabweichung) | Wirkungsgrad [%] |
| 1 | Protease III | 12,00 (2,74) | 87,50 |
| 2 | Protease III + T/S-Forte | 18,00 (2,74) | 81,25 |
| 3 | Protease III + BioMaxima | 11,00 (5,48) | 88,54 |
| 4 | Protease III + Nufilm P | 12,00 (2,74) | 87,50 |
| 5 | Atempo (Kupfer-Referenzmittel) | 1,80 (1,79) | 98,13 |
| 6 | Wasser - Kontrolle | 96,00 (5,48) | 00,0 |

Pflanzen, welche mit Protease III behandelt wurden, zeigten einen stabilen Schutz mit einem Wirkungsgrad von 81-87% bezogen auf den Wirkungsgrad eines üblichen Kupferstandards. Formulierungshilfsstoffe, wie TS-Forte, BioMaxima und NufilmP, führten nicht zur Steigerung der Wirkung gegenüber Variante 1.

### Beispiel 6

### Protektive Wirkung proteinspaltender Enzympräparate gegen Pseudooeronospora cubensis an Gurkenpflanzen

Gurkenpflanzen wurden im Klimaraum angezogen. Für den Nachweis der protektiven Wirkung von Proteasen wurden etwa 6 ml des Proteasepräparates (Prot III), welches in einer wässrigen Lösung mit der Konzentration von 0,1% vorlag, auf die Blattunterseiten aufgesprüht. Die pH-Werte der Spritzbrühen wurden zwischen 6,5 und 7,5 eingestellt. Als Kontrollen diente ein gängiges Kupferpräparat (Cuprozin Progress) und Wasser. Pro Variante wurden 6 Wiederholungen mit je einer Pflanze angesetzt. Einen Tag nach der Enzymapplikation wurden die Versuchspflanzen mit Pseudoperonospora cubensis infiziert (75 000 Sporen pro ml). Die Inkubation erfolgte bei Raumtemperatur in einem Gewächshaus mit einer relativen Luftfeuchte von mehr als 95% statt. Während der ersten 48 Stunden wurden die Pflanzen im Dunkeln inkubiert, danach wurden die Pflanzen im Tag/Nacht-Rhythmus von 16/8 Stunden gehalten. Die Bonitur erfolgte 10 Tage nach der Infektion. Dabei wurde der prozentuale Befall der Pflanzen ermittelt. Durch den Einsatz des Präparates Prot III konnte der Befall auf weniger als 4% reduziert werden (Tab. 4).

**Tabelle 4:**

| Befall durch *Pseudoperonospora cubensis* in % und Wirkungsgrad des Protease Präparates | | | |
|---|---|---|---|
| Nr. | Variante | Befall [%] Mittelwert (Standardabweichung) | Wirkungsgrad [%] |
| 1 | Protease III | 3,6 (0,4) | 94,1 |
| 5 | Cuprozin Progress (Kupferstandard) | 9,00 (4,7) | 85,2 |
| 6 | Wasser | 60,4 (11,9) | 00,0 |

### Beispiel 7

### Vergleich der regulierenden Wirkung verschiedener Proteasepräparate gegen Pseudoperonospora cubensis an Gurkenpflanzen

Gurkenpflanzen wurden im Klimaraum angezogen. Für den Vergleich des Wirkungsgrades verschiedener Proteasepräparate wurden etwa 6 ml des jeweiligen Proteasepräparates (Prot III - Prot IX), welche in einer wässrigen Lösung mit der Konzentration von 0,1% vorlagen, auf die Blattunterseiten aufgesprüht. Die pH-Werte der Spritzbrühen wurden zwischen 6,5 und 7,5 eingestellt. Als Kontrollen diente ein gängiges Kupferpräparat (Cuprozin Progress) und Wasser. Pro Variante wurden 6 Wiederholungen mit je einer Pflanze angesetzt. Einen Tag nach der Enzymapplikation wurden die Versuchspflanzen mit Pseudoperonospora cubensis infiziert. Die Inkubation erfolgte bei Raumtemperatur in einem Gewächshaus mit einer relativen Luftfeuchte von mehr als 95% statt. Während der ersten 48 Stunden wurden die Pflanzen im Dunkeln inkubiert, danach wurden die Pflanzen im Tag/Nacht-Rhythmus von 16/8 Stunden gehalten. Die Bonitur erfolgte 10 Tage nach der Infektion. Dabei wurde der prozentuale Befall der Pflanzen ermittelt. Der Wirkungsgrad der einzelnen Präparate ist in Tabelle 5 dargestellt. Das Präparat mit der besten Wirkung war die Protease III. Die Proteasen IV, VIII und IX haben eine vergleichbare Wirkung. In Tabelle 5 ist so weit bekannt, der Ursprungsorganismus der jeweiligen Protease dargestellt.

**Tabelle 5:**

| Übersicht über die im Experiment verwendeten Protease Präparate, sowie der Befall und die entsprechenden Wirkungsgrade. | | | | |
|---|---|---|---|---|
| Proben ID | Ursprung | Produkt | Befall [%] Mittelwert (Standardabweichung) | Wirkungsgrad [%] |
| Prot III | Nocaridiopsis | Ronoyzme ProAct | 0,4 (0,4) | 98,6 |
| Prot IV | Bacillus | Alcalase | 0,5 (0,4) | 98,3 |
| Prot V | Bacillus | Savinase | 9,8 (4,8) | 65,8 |
| Prot VI | Asperigillus | Flavourzyme | 35,0 (21,5) | -- |
| Prot VIII | Papaya | PAP 2XS | 0,8 (0,3) | 97,2 |
| Prot IX | Bacillus | Protease AP Conc | 1,0 (0,6) | 98,5 |
| Kupferfungizid | - | Cuprozin Progress | 7,4 (6,2) | 74 |

### Schutz vor Infektion von Kulturpflanzen durch Bakterien

### Beispiel 8

### Plattentest zum Nachweis der wachstumshemmenden Wirkung von Protease gegenüber Clavibacter michiganensis

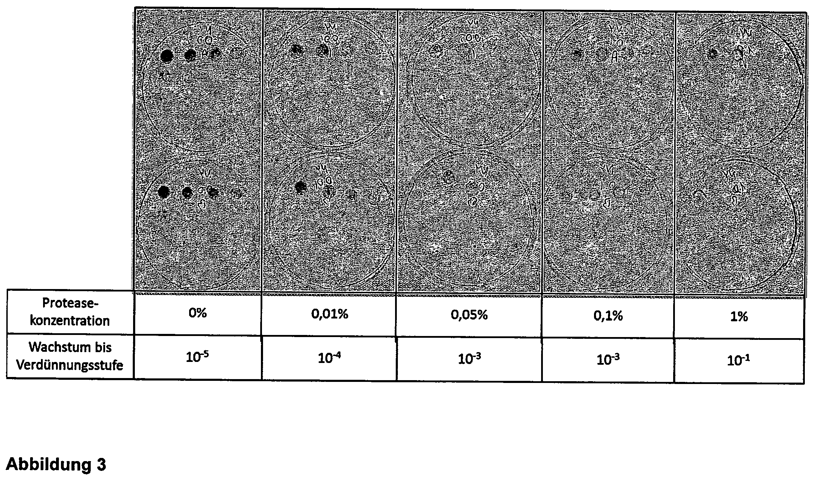

Eine Kultur von *Clavibacter michiganensis* wurde bis zur Spätlogphase angezogen und entsprechend auf OD6oonm = 1.0 in einer 10mM NaCl Lösung verdünnt. Diese Ausgangskultur wurde in jeweils 12 Verdünnungen von 10⁻¹ bis 10⁻¹² auf Nähragar Platten aufgetragen, welche das Präparat Protease III in den Konzentrationen 0,01- 1 % enthielten. Zwei Kontrollplatten waren frei von Protease III und zeigten das maximale Wachstum von *Clavibacter michiganensis* unter den gegebenen Bedingungen an (Abb. 3, links: 10⁻⁵). Ab einer Proteasekonzentration von 0,05%, wurde das bakterielle Wachstum deutlich gehemmt, da nur die höchst konzentrierten Verdünnungen gewachsen sind (von 10⁻¹ bis 10⁻³, siehe Abb. 3). Das große Potential der Protease III als Pflanzenschutzmittel zur Kontrolle der bakteriellen Tomatenwelke (*Clavibacter michiganensis subsp. michiganensis*) wird durch diesen Versuch deutlich.

### Beispiel 9

### Schutz von Tomatenpflanzen vor Pseudomonas syringae Infektion

Für diesen Versuch wurden Tomatenpflanzen der Sorte "Red Robin" mit einer 0,1 %igen Protease-Lösung (Protease III) mit und ohne Zusatz eines Haftmittels (NufilmP) besprüht und bei 22°C für 24 Stunden inkubiert. Der pH-Wert der Spritzbrühen wurde auf 6,5 bis 7,5 eingestellt. Als Kontrolle dienten je 4 Pflanzen, die mit Leitungswasser bzw. einem Vergleichsmittel besprüht wurden. 24 Stunden nach der Enzymapplikation wurde die Pflanzen mit Pseudomonas syringae infiziert.

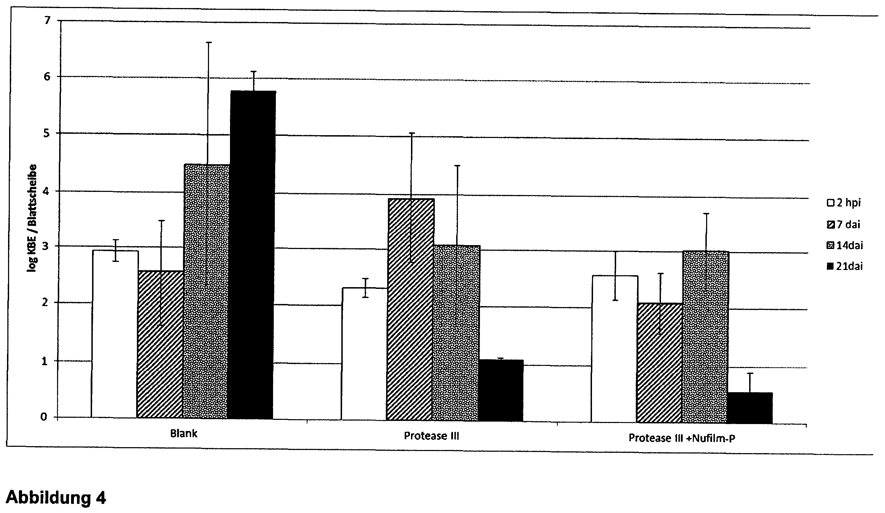

Die ersten Proben von 0.7 cm² großen Blattsegmenten wurden zwei Stunden nach Inokulation genommen, weitere Proben wurden 7, 14 und 21 Tage nach Inokulation genommen. In die Analyse gingen jeweils 4 Blättersegmenten von 4 Einzelblättern von 4 Pflanzen ein. Die Anzahl der koloniebildenden Einheiten (KBE) pro Blattsegment lag zum Startzeitpunkt bei 1 x 10³. In der Kontrolle (Wasser) stieg die Anzahl der KBE innerhalb der drei Wochen auf etwa 1 x 10⁶ KBE pro Blattsegment an. Mit Protease III behandelte Pflanzen hielten den Level von Versuchsbeginn (10³ KBE pro Blatt) während der ersten beiden Wochen. Nach drei Wochen war die Anzahl der KBE pro Blatt auf den Protease-behandelten Blättern signifikant auf 10 KBE pro Blattsegment gesunken (Abb. 4). Die eingesetzte Protease war deutlich wirksamer als die Vergleichssubstanz.

### Literatur:

DE LA FUENTE, L. and BURDMAN, S. 2011. Pathogenic and beneficial plantassociated bacteria. In Agricultural Sciences, [Ed.Rattan Lal], in Encyclopedia of Life Support Systems (EOLSS), Developed under the Auspices of the UNESCO, Eolss Publishers, Oxford ,UK, [http://www.eolss.net]
DE MARCO, J.L; VALADARES-INGLIS, M.C. and CR. FELIX, 2003: Production of hydrolytic enzymes by Trichoderma isolates with antagonistic activity against Crinipellis perniciosa, the causal agent of witches' broom of cocoa. Brazilian J. Microbiol. 34, 33 - 38
KASSEMEYER H.-H. (2004) Forschungsvorhaben für das Programm des Bundesministeriums für Verbraucherschutz, Ernährung und Landwirtschaft zur Förderung von Forschungsund Entwicklungsvorhaben sowie zum Technologieund Wissenstransfer im ökologischen Landbau. "Innovationen zur Verbesserung der Rahmenbedingungen für den ökologischen Weinbau. Erarbeitung von wissenschaftlichen Ansätzen zur biologischen Kontrolle der Rebenperonospora und für Strategien zu deren Regulierung im ökologischen Weinbau", Projektnummer 020E269, Staatliches Weinbauinstitut Freiburg
KUDO, S. and C. TESHIMA, 1991 : Enzyme activities and antifungal action of fertilization envelope extract from fish eggs. The Journal of Experimental Zoology 259, 392 - 398
KUDO, S., 1992: Enzymatic basis for protection of fish embryos by the fertilization envelope. Experientia 48, 277 - 281
KUDO, S., 2000: Enzymes responsible for the bactericidal effect in extracts of vitelline and fertilization envelopes of rainbow traut eggs. Zygote 8, 257 - 265
KÜCÜK, C. and M. KIVANC 2002: Isolation of Trichoderma spp. and determination of their antifungal, biochemical and physiological features. Türk. J. Biol. 27, 247-253 MALATHRAKIS, N.E., GOUMAS, D.E. 1999: Fungal and bacterial diseases. See Ref. 4 pp. 34-47.
MÜNCH, S., NEUHAUS, J.M., BOLLER, T., KEMMERLING, B. and K.H. KOGEL 1997: Expression of β-1 ,3-glucanase and chitinase in healthy, stem rust-affected and elicitor-treated near-isogenic wheat lines showing Sr5 or Sr24-specific rust resistance. Planta 201 , 235-244
OERKE, E.CH. und U. STEINER 1996: Ertragsverluste und Pflanzenschutz: Die Anbausituation für die wirtschaftlich wichtigsten Kulturen. Schriftenreihe der deutschen Phytomedizinischen Gesellschaft, Eugen Ulmer GmbH & Co., Stuttgart
PAULITZ, T.C. BELANGER, R.R. 2001 : Biological control in greenhouse Systems. Annu. Rev. Phytopathol. 39, 103-133
POWELL, K. A., JUTSUM, A. R. (1993) Technical and commercial aspects of biocontrol products. Pestic. Sei. 37, 315-321.
SCALA F., S.L. WOO, I. GARCIA, A. ZOINA, E. FILIPPONE, J.-A. PINTOR- TORO, G. DEL SORBO, B. ALOJ and M. LORITO. 1998. Transgenic tobaeco and potato plants expressing antifungal genes from Trichoderma are resistent to several plant pathogenic fungi. 7th International Congress of Plant Pathology, August 9-16 1998, Edinburgh, Scotland, Offered Papers Abstracts - Volume 3: 5.3.10.
WO 2004/002574 A1 Biopract GmbH, Berlin; LEIBNIZ-Institut für Gewässerökologie und Binnenfischerei im Forschungsverbund Berlin e.V. Verfahren zur Prophylaxe und Therapie von Mykosen bei Fischen und Wirbellosen und deren Entwicklungsstadien. (Erloschen)
DE 10 2205 048 520 Biopract GmbH, Berlin GmbH, Institut für Gemüse und Zierpflanzenbau Großbeeren/Erfurt. Verfahren zur Prophylaxe und Therapie von Mykosen bei Nutz- und Zierpflanzen sowie bei Gehölzen, insbesondere in hydroponischen Systemen, 07.10.2007 Legende zu den Abbildungen
Abbildung 1: Mit Wasser (A), kupferhaltigem Pflanzenschutzmittel (B), Protease I (C), Protease II (D) oder Protease III (E) behandelte Blattscheiben.
Abbildung 2: Wirksamkeitstest der Prot III an Müller-Thurgau Topfreben. Dargestellt ist die Befallsstärke von *P. viticola* in den behandelten Varianten Protease III 0,01%- 0,5% im Vergleich zu den internen Standards Wasserkontrolle und dem Kupfer Referenzmittel. Die Befallstärke wurde durch den Einsatz von Prot III wirkungsvoll verhindert. Der erhöhte Befall auf mit 0,5%iger Prot III (*) behandelten Pflanzen wurde durch einen Spritzschatten auf einem einzelnen Blatt verursacht. Die Befallsstärke wurde basierend auf dem prozentuale Befall von jeweils 6 Pflanzen mit bis zu 6 Blättern pro Variante errechnet.
Abbildung 3: Darstellung der hemmenden Wirkung der Protease III auf das Wachstum von C. *michigenesis.* Dargestellt sind Verdünnungsreihen einer bakteriellen Kultur auf verschiedenen Konzentrationen von Protease III. Nummern unter den Agarplatten verdeutlichen die Verdünnungsstufe bis zu welcher die Bakterien gewachsen sind.
Abbildung 4: Proliferation von *P. syringea* Bakterien an Blattsegmenten von Tomate während 21 Tagen nach Inokulation. Tomatenpflanzen wurden Mock-behandelt (Blank), bzw. mit Protease III oder mit Protease III in Nufilm-P besprüht. Die koloniebildenden Einheiten (KBE) wurden aus in 0.7 cm² Blattsegmenten isoliert und nach einer Inkubation von 48 Stunden gezählt.

## Patentansprüche

1. Verfahren zur Prophylaxe von Infektionen bei Nutz- und Zierpflanzen, **dadurch gekennzeichnet, dass** die oberirdischen Pflanzenteile mit einer wässrigen Lösung einer bakteriellen Serinprotease besprüht werden, und **dadurch gekennzeichnet, dass** die bakterielle Serinprotease aus *Bacillus sp.* oder *Nocardiopsis sp.* stammt.

2. Verfahren zur Prophylaxe von Infektionen bei Nutz- und Zierpflanzen nach Anspruch 1, **dadurch gekennzeichnet, dass** die bakterielle Serinprotease aus *Nocardiopsis sp.* stammt.

3. Verfahren zur Prophylaxe von Infektionen bei Nutz- und Zierpflanzen nach Anspruch 1, **dadurch gekennzeichnet, dass** die wässrige Lösung allein die bakterielle Serinprotease enthält.

4. Verfahren zur Prophylaxe von Infektionen bei Nutz- und Zierpflanzen nach Anspruch 1 oder 3, **dadurch gekennzeichnet, dass** die wässrige Lösung allein eine Kombination bakterieller Serinproteasen enthält.

5. Verfahren zur Prophylaxe von Infektionen bei Nutz- und Zierpflanzen nach Anspruch 1 bis 4, **dadurch gekennzeichnet, dass** die Infektionen durch Oomyceten hervorgerufen werden.

6. Verfahren zur Prophylaxe von Infektionen bei Nutz- und Zierpflanzen nach Anspruch 5, **dadurch gekennzeichnet, dass** es sich bei den Oomyceten um *Plasmopara viticola, Phytophthora infestans* oder *Pseudoperonospora cubensis* handelt.

7. Verfahren zur Prophylaxe von Infektionen bei Nutz- und Zierpflanzen nach Anspruch 1 bis 4, **dadurch gekennzeichnet, dass** die Infektionen durch Bakterien hervorgerufen werden.

8. Verfahren zur Prophylaxe von bakteriellen Infektionen bei Nutz- und Zierpflanzen nach Anspruch 7, **dadurch gekennzeichnet, dass** es sich bei den Bakterien um *Pseudomonas syringae* oder *Clavibacter michiganensis* handelt.

9. Verfahren zur Prophylaxe von Infektionen bei Nutz- und Zierpflanzen nach Anspruch 1 bis 8, **dadurch gekennzeichnet, dass** die wässrige Lösung einer bakteriellen Serinprotease bei der Bekämpfung pathogener Erreger in einer Dosis von 0,001 % - 1% appliziert wird.

10. Verfahren zur Prophylaxe von Infektionen bei Nutz- und Zierpflanzen nach Anspruch 1 bis 9, **dadurch gekennzeichnet, dass** eine zeitliche Intervallbehandlung der Pflanzen durchgeführt wird.

11. Verfahren zur Prophylaxe von Infektionen bei Nutz- und Zierpflanzen nach Anspruch 1 bis 10, **dadurch gekennzeichnet, dass** die wässrige Lösung einer bakteriellen Serinprotease bei pH-Werten von 4,0 - 8,0 eingesetzt wird.

12. Verfahren zur Prophylaxe von Infektionen bei Nutz- und Zierpflanzen nach Anspruch 1 bis 11, **dadurch gekennzeichnet, dass** die wässrige Lösung einer bakteriellen Serinprotease bei Temperaturen von 4 bis 34 °C eingesetzt wird.

13. Verfahren zur Prophylaxe von Infektionen bei Nutz- und Zierpflanzen nach Anspruch 1 bis 12, **dadurch gekennzeichnet, dass** die wässrige Lösung einer bakteriellen Serinprotease mit Haft- und Netzmitteln sowie mit Stabilisatoren formuliert ist.

## Claims

1. Method for prophylaxis of infections in crops and ornamentals, **characterized in that** the above-ground parts of the plants are sprayed with an aqueous solution of a bacterial serine protease, and **characterized in that** the bacterial serine protease is derived from *Bacillus sp.* or *Nocardiopsis sp.*

2. Method for prophylaxis of infections in crops and ornamentals according to claim 1, **characterized in that** the bacterial serine protease is derived from *Nocardiopsis sp.*

3. Method for prophylaxis of infections in crops and ornamentals according to claim 1, **characterized in that** the aqueous solution contains only the bacterial serine protease.

4. Method for prophylaxis of infections in crops and ornamentals according to claim 1 or 3, **characterized in that** the aqueous solution contains only a combination of bacterial serine proteases.

5. Method for prophylaxis of infections in crops and ornamentals according to claims 1 to 4, **characterized in that** the infections are caused by oomycetes.

6. Method for prophylaxis of infections in crops and ornamentals according to claim 5, **characterized in that** the oomycetes are *Plasmopara viticola, Phytophthora infestans,* or *Pseudoperonospora cubensis.*

7. Method for prophylaxis of infections in crops and ornamentals according to claims 1 to 4, **characterized in that** the infections are caused by bacteria.

8. Method for prophylaxis of bacterial infections in crops and ornamentals according to claim 7, **characterized in that** the bacteria are *Pseudomonas syringae* or *Clavibacter michiganensis.*

9. Method for prophylaxis of infections in crops and ornamentals according to claims 1 to 8, **characterized in that** the aqueous solution of a bacterial serine protease is applied in a dose of 0.001% to 1% to combat pathogenic agents.

10. Method for prophylaxis of infections in crops and ornamentals according to claims 1 to 9, **characterized in that** the plants are treated at intervals.

11. Method for prophylaxis of infections in crops and ornamentals according to claims 1 to 10, **characterized in that** the aqueous solution of a bacterial serine protease is used at pH values ranging from 4.0 to 8.0.

12. Method for prophylaxis of infections in crops and ornamentals according to claims 1 to 11, **characterized in that** the aqueous solution of a bacterial serine protease is used at temperatures of 4 to 34 °C.

13. Method for prophylaxis of infections in crops and ornamentals according to claims 1 to 12, **characterized in that** the aqueous solution of a bacterial serine protease is formulated with adhesion and wetting agents as well as with stabilizers.

## Revendications

1. Procédé de prophylaxie d'infections dans le cas de plantes utiles et d'agrément, **caractérisé en ce que** les parties de plante aériennes sont pulvérisées d'une solution aqueuse d'une protéase à sérine bactérienne, et **caractérisé en ce que** la protéase à sérine bactérienne provient de *Bacillus sp.* ou *Nocardiopsis sp.*

2. Procédé de prophylaxie d'infections dans le cas de plantes utiles et d'agrément selon la revendication 1, **caractérisé en ce que** la protéase à sérine bactérienne provient de *Nocardiopsis sp.*

3. Procédé de prophylaxie d'infections dans le cas de plantes utiles et d'agrément selon la revendication 1, **caractérisé en ce que** seule la solution aqueuse contient la protéase à sérine bactérienne.

4. Procédé de prophylaxie d'infections dans le cas de plantes utiles et d'agrément selon la revendication 1 ou 3, **caractérisé en ce que** seule la solution aqueuse contient une combinaison de protéases à sérine bactériennes.

5. Procédé de prophylaxie d'infections dans le cas de plantes utiles et d'agrément selon les revendications 1 à 4, **caractérisé en ce que** les infections sont provoquées par des oomycètes.

6. Procédé de prophylaxie d'infections dans le cas de plantes utiles et d'agrément selon la revendication 5, **caractérisé en ce qu'**il s'agit dans le cas des oomycètes de *Plasmopara viticola, Phytophthora infestans* ou *Pseudoperonospora cubensis.*

7. Procédé de prophylaxie d'infections dans le cas de plantes utiles et d'agrément selon les revendications 1 à 4, **caractérisé en ce que** les infections sont provoquées par des bactéries.

8. Procédé de prophylaxie d'infections dans le cas de plantes utiles et d'agrément selon la revendication 7, **caractérisé en ce qu'**il s'agit dans le cas des bactéries de *Pseudomonas syringae* ou *Clavibacter michiganensis.*

9. Procédé de prophylaxie d'infections dans le cas de plantes utiles et d'agrément selon les revendications 1 à 8, **caractérisé en ce que** la solution aqueuse d'une protéase à sérine bactérienne est appliquée lors de la lutte contre des agents pathogènes à une dose de 0,001 % à 1 %.

10. Procédé de prophylaxie d'infections dans le cas de plantes utiles et d'agrément selon les revendications 1 à 9, **caractérisé en ce qu'**un traitement à intervalle temporel des plantes est réalisé.

11. Procédé de prophylaxie d'infections dans le cas de plantes utiles et d'agrément selon les revendications 1 à 10, **caractérisé en ce que** la solution aqueuse d'une protéase à sérine bactérienne est utilisée à des valeurs de pH de 4,0 à 8,0.

12. Procédé de prophylaxie d'infections dans le cas de plantes utiles et d'agrément selon les revendications 1 à 11, **caractérisé en ce que** la solution aqueuse d'une protéase à sérine bactérienne est utilisée à des températures de 4 à 34 °C.

13. Procédé de prophylaxie d'infections dans le cas de plantes utiles et d'agrément selon les revendications 1 à 12, **caractérisé en ce que** la solution aqueuse d'une protéase à sérine bactérienne est formulée avec des agents adhésifs et mouillants ainsi que des stabilisants.
